# EUROPÄISCHE PATENTSCHRIFT

(11) **EP 0 819 567 B1**
(45) Veröffentlichungstag und Bekanntmachung des Hinweises auf die Patenterteilung: **03.04.2002**
(21) Anmeldenummer: 97111278.4
(22) Anmeldetag: 04.07.1997
(51) Int. Cl.: B60N 2/28

(54) **Befestigungsvorrichtung für einen zwei Schlosszungen aufweisenden Kindersitz**
Fastening device for an infant seat with two buckle tongues
Dispositif de fixation pour siège d'enfant à deux languettes de verrouillage

(30) Priorität: 17.07.1996 DE 29612441 U
(43) Veröffentlichungstag der Anmeldung: 21.01.1998
(73) Patentinhaber: ADAM OPEL AG, 65423 Rüsselsheim (DE)
(72) Erfinder: Mies, Karl, Dipl.-Ing., 65203 Wiesbaden (DE); Trutter, Walter Paul, 65191 Wiesbaden (DE)

(56) Entgegenhaltungen:
- EP-A- 0 537 019
- EP-A- 0 656 279
- DE-A- 2 840 536
- DE-A- 4 337 360
- FR-A- 2 690 062
- GB-A- 2 044 074

## Beschreibung

Die Erfindung betrifft eine Befestigungsvorrichtung für einen zwei Schloßzungen aufweisenden Kindersitz, eine Kinderliege oder dergleichen auf einem Fahrzeugsitz, bei der zur lösbaren Aufnahme der Schloßzungen zwei Gurtschlösser vorgesehen sind, welche jeweils an einem mit dem Fahrzeug oder dem Fahrzeugsitz zu verankernden, zwischen einer Sitzfläche und einer Rückenlehne hindurchführende Gurte angeordnet sind.

Befestigungsvorrichtungen der vorstehenden Art werden derzeit in Kraftfahrzeugen eingesetzt und sind daher allgemein bekannt. Als Beispiel für den Stand der Technik sei auf die EP-A-0 537 019 verwiesen, die statt zwei flach auf der Sitzfläche aufliegende Verankerungslaschen auch die Anwendung von Gurtschlösser erwähnt, siehe Spalte 7, Zeile 20-25. In diese lassen sich die beiden Schloßzungen des Kindersitzes einstecken.

Üblicherweise sind die Gurtschlösser von jeweils einem Gurt gehalten, der von der Rückseite des Fahrzeugsitzes her durch den Zwischenraum zwischen der Sitzfläche und der Unterseite der Rückenlehne führt. Nachteilig hierbei ist, daß die Gurtschlösser aufgrund der Biegsamkeit der Gurte nach hinten hin ausweichen, wenn man den Kindersitz mit seinen Schloßzungen in diese Gurtschlösser schieben will. Um das zu verhindern, muß man mit der Hand die Gurtschlösser festhalten, was jedoch Schwierigkeiten macht, weil man nicht gleichzeitig zwei Gurtschlösser festhalten und den Kindersitz verschieben kann, so daß man nacheinander erst die eine Schloßzunge und dann die andere verriegeln muß. Weiterhin muß man sich zum Festhalten des fahrzeuginnenseitig liegenden Gurtschlosses weit in das Fahrzeug beugen. Für beide Gurtschlösser gilt, daß diese schwierig festzuhalten sind, weil der Spalt zwischen der Rückenlehne des Fahrzeugsitzes und dem Kindersitz bei befestigtem Kindersitz möglichst eng sein soll.

Der Erfindung liegt das Problem zugrunde, eine Befestigungsvorrichtung der eingangs genannten Art so zu gestalten, daß ein Kindersitz, eine Kinderliege oder dergleichen möglichst bequem befestigt und gelöst werden kann.

Dieses Problem wird erfindungsgemäß dadurch gelöst, daß die beiden Gurtschlösser in einem gemeinsamen Adapter gehalten sind, welcher an seiner Rückseite eine zur Anlage an die Rückenlehne ausgebildete Abstützfläche hat.

Durch einen solchen Adapter wird für beide Gurtschlösser gemeinsam verhindert, daß diese beim Einschieben der Gurtzungen in die Gurtschlösser nach hinten ausweichen können. Deshalb genügt es, mit den Händen allein den Kindersitz oder die Kinderliege zu halten und mit den Gurtzungen in die Gurtschlösser einzuschieben. Weiterhin sichert der Adapter den gegenseitigen Abstand der Gurtschlösser, so daß dieser genau dem Abstand der Gurtzungen entspricht.

Der Adapter ist besonders rasch mit den Gurtschlössern zu verbinden und wieder von ihnen zu lösen, wenn er gemäß einer Weiterbildung der Erfindung zur Halterung der Gurtschlösser an jeder Seite eine nach oben hin offene Aufnahme zum Einlegen jeweils eines Gurtschlosses hat. Ein solcher Adapter kann sehr leicht von den Gurtschlössern gelöst werden, so daß er nicht stört, wenn der Fahrzeugsitz ohne Kindersitz benutzt werden soll.

Die Gurtschlösser halten ausreichen fest im Adapter, ohne daß zu ihrer Befestigung oder ihrem Lösen ein Werkzeug notwendig wird, wenn jede Aufnahme eine vordere Begrenzungswand mit einem Schlitz zum Durchstecken einer Schloßzunge und eine rückwärtige Rastzunge zum Verrasten mit dem Gurtschloß hat.

Besonders einfach ist der Adapter gestaltet, wenn gemäß einer anderen Weiterbildung der Erfindung die Rastzunge zum Eingreifen zwischen dem Gehäuse des Gurtschlosses und seinem Gurthalteteil ausgebildet ist.

Auch wenn eine Rastzunge früher als die andere in eine Schloßzunge gelangt, weil der Kindersitz zunächst schräg zum Fahrzeugsitz gehalten wird, kommt es nicht zu einem Verschwenken des Adapters, wenn der Adapter angrenzend an jeder Aufnahme jeweils einen nach oben gerichteten Steg mit jeweils einer Abstützfläche hat.

Die Handhabung des Adapters ist besonders bequem, wenn er an seiner Vorderseite eine nach vorn ragende Griffschlaufe hat.

Die beiden Gurte der Gurtschlösser können sehr einfach an der Rückseite üblicher Fahrzeugsitze befestigt werden, wenn zur Verankerung der beiden Gurte ein an der Rückseite des Fahrzeugsitzes befestigbarer Träger mit zwei Schlitzen zum Durchführen jeweils eines Gurtendes vorgesehen ist.

Alternativ hierzu kann man jedoch auch vorsehen, daß die Befestigungsvorrichtung zur Verankerung der beiden Gurte zwei Konsolen aufweist, welche jeweils zur Befestigung an jeder Seite des Fahrzeugsitzes auf seiner Schwenkachse für die Rückenlehne ausgebildet sind.

Die Erfindung läßt verschiedene Ausführungsformen zu. Zur weiteren Verdeutlichung ihres Grundprinzips sind mehrere davon in der Zeichnung perspektivisch dargestellt und werden nachfolgend beschrieben. Diese zeigt in
- Fig. 1:: eine Sitzbank mit einem auf einem Fahrzeugsitz gehaltenen Kindersitz,
- Fig. 2:: einen erfindungsgemäßen Adapter zur Befestigung des Kindersitzes,
- Fig. 3:: den Adapter und einen Teilbereich des Kindersitzes unmittelbar vor seiner Befestigung,
- Fig. 4:: einen Träger mit Gurten zur Befestigung an der Rückseite eines Fahrzeugsitzes,
- Fig. 5:: eine Konsole mit einem Gurt zur Befestigung an einer Seite eines Fahrzeugsitzes.

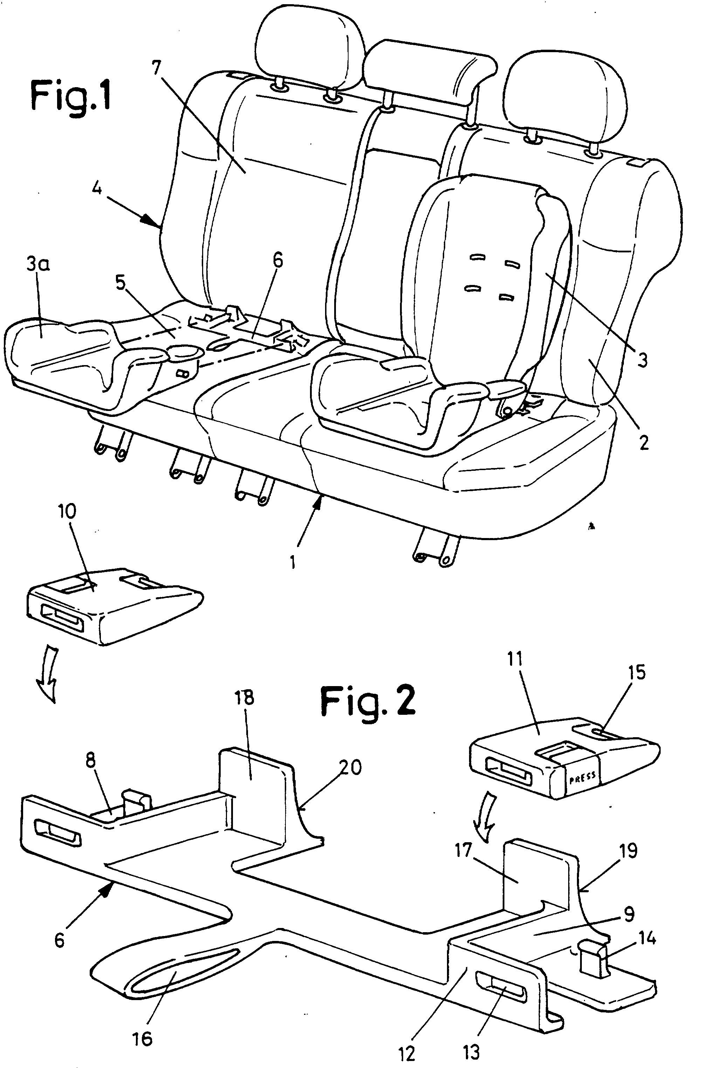

Die Figur 1 zeigt eine Sitzbank 1, bei der auf einem Fahrzeugsitz 2 ein Kindersitz 3 gehalten ist. Auf einem anderen Fahrzeugsitz 4 erkennt man auf seiner Sitzfläche 5 einen Adapter 6, welcher der Befestigung des Kindersitzes 3a dient und der sich auf noch zu erläuternde Weise nach hinten hin gegen eine Rückenlehne 7 des Fahrzeugsitzes 4 abstützt.

In Figur 2 ist der Adapter 6 gegenüber Figur 1 im Maßstab vergrößert dargestellt. Er hat nahe seiner beiden Außenseiten jeweils eine Aufnahme 8, 9, in die von oben her jeweils ein Gurtschloß 10, 11 eingelegt werden kann. Die beiden Aufnahmen 8, 9 sind nach vorn hin jeweils von einer Begrenzungswand 12 begrenzt, die einen Schlitz 13 hat. Zur Rückseite hin wird jede Aufnahme 8, 9 von einer Rastzunge 14 begrenzt. Diese ist so bemessen und angeordnet, daß sie in den Zwischenraum zwischen einem beim Gurtschloß 11 positionierten Gurthalteteil 15 und dem Gehäuse des Gurtschlosses 10, 11 greift und dabei über das Gehäuse schnappt. An seiner Vorderseite hat der Adapter 6 eine Griffschlaufe 16, mit der er bequem gehandhabt werden kann.

Nahe der beiden Aufnahmen 8, 9 hat der Adapter 6 zwei nach oben gerichtete Stege 17, 18, welche jeweils an ihrer Rückseite eine bogenförmig gekrümmte Abstützfläche 19, 20 aufweisen. Mit diesen Abstützflächen 19, 20 liegt der Adapter 6 gegen die jeweilige Rückenlehne 7 an.

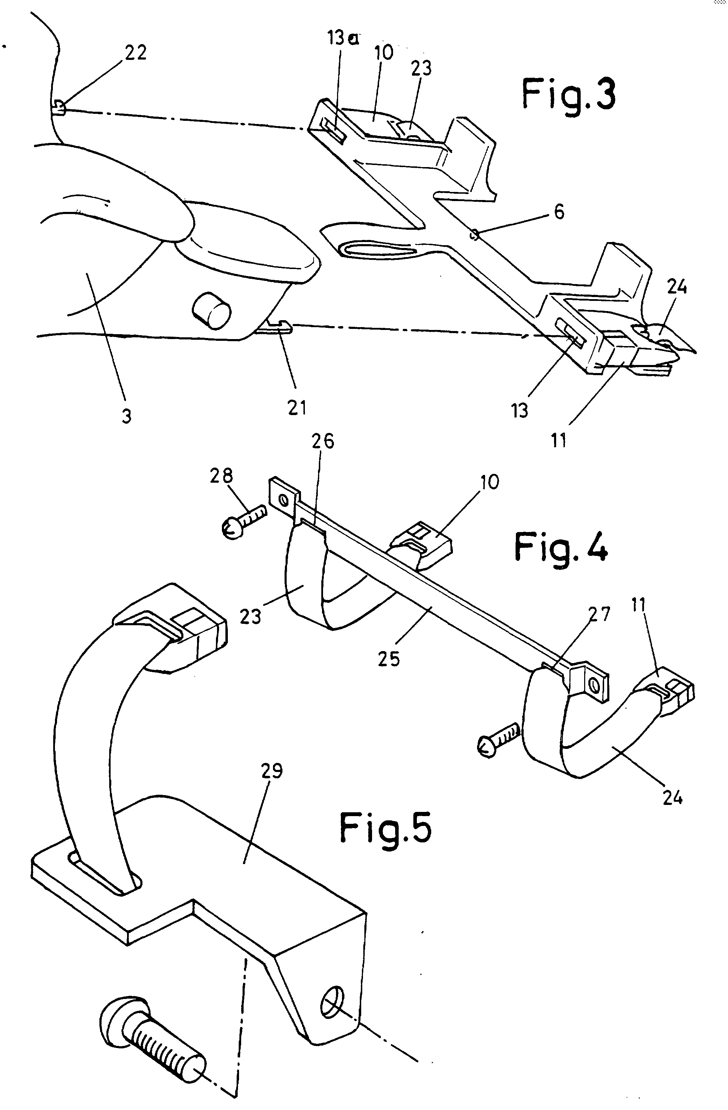

Die Figur 3 zeigt einen unteren Bereich des Kindersitzes 3 mit zwei Schloßzungen 21, 22. Im Adapter 6 sind die Gurtschlösser 10, 11 eingelegt, an denen in Figur 3 jeweils ein Gurt 23, 24 zu erkennen ist. Schiebt man den Kindersitz 3 nach rechts, dann greifen die Schloßzungen 21, 22 durch die Schlitze 13, 13a des Adapters 6 und verriegeln in dem jeweiligen Gurtschloß 10, 11.

In Figur 4 ist ein Träger 25 dargestellt, welcher nahe seiner äußeren Enden jeweils einen Schlitz 26, 27 hat, in dem ein Ende des jeweiligen Gurtes 23, 24 befestigt ist. Dieser Träger 25 wird durch Schrauben 28 an der Rückseite des jeweiligen Fahrzeugsitzes 2 oder 4 befestigt. Die Gurte 23, 24 führt man dann durch den Zwischenraum zwischen der jeweiligen Rückenlehne 7 und der Sitzfläche 5, so daß die Gurtschlösser 10, 11 mit dem Adapter 6 verbunden werden können.

Die Figur 5 zeigt eine Konsole 29, welche zur Befestigung an der rechten Seite einer nicht gezeigten Schwenkachse der Rückenlehne 7 der Fahrzeugsitze 2, 4 ausgebildet ist. Auf die linke Seite der Schwenkachse ist eine spiegelbildlich zur Konsole 29 gestaltete Konsole zu montieren. Jede der beiden Konsolen 29 trägt dann einen Gurt 23 bzw. 24 mit einem Gurtschloß 10 bzw. 11.

## Patentansprüche

1. Befestigungsvorrichtung für einen zwei Schloßzungen aufweisenden Kindersitz, eine Kinderliege oder dergleichen auf einem Fahrzeugsitz, bei der zur lösbaren Aufnahme der Schloßzungen zwei Gurtschlösser vorgesehen sind, welche jeweils an einem mit dem Fahrzeug oder dem Fahrzeugsitz zu verankernden, zwischen einer Sitzfläche und einer Rückenlehne hindurchführenden Gurt angeordnet sind, **dadurch gekennzeichnet, daß** die beiden Gurtschlösser (10, 11) in einem gemeinsamen Adapter (6) gehalten sind, welcher an seiner Rückseite eine zur Anlage an die Rückenlehne (7) ausgebildete Abstützfläche (19, 20) hat.

2. Befestigungsvorrichtung nach Anspruch 1, **dadurch gekennzeichnet, daß** der Adapter (6) zur Halterung der Gurtschlösser (10, 11) an jeder Seite eine nach oben hin offene Aufnahme (8, 9) zum Einlegen jeweils eines Gurtschlosses (10, 11) hat.

3. Befestigungsvorrichtung nach Anspruch 2, **dadurch gekennzeichnet, daß** jede Aufnahme (8, 9) eine vordere Begrenzungswand (12) mit einem Schlitz (13) zum Durchstecken einer Schloßzunge (21, 22) und eine rückwärtige Rastzunge (14) zum Verrasten mit dem Gurtschloß (10, 11) hat.

4. Befestigungsvorrichtung nach Anspruch 3, **dadurch gekennzeichnet, daß** die Rastzunge (14) zum Eingreifen zwischen dem Gehäuse des Gurtschlosses (10, 11) und seinem Gurthalteteil (15) ausgebildet ist.

5. Befestigungsvorrichtung nach zumindest einem der vorangehenden Ansprüche, **dadurch gekennzeichnet, daß** der Adapter (6) angrenzend an jeder Aufnahme (8, 9) jeweils einen nach oben gerichteten Steg (17, 18) mit jeweils einer Abstützfläche (19, 20) hat.

6. Befestigungsvorrichtung nach zumindest einem der vorangehenden Ansprüche, **dadurch gekennzeichnet, daß** der Adapter (6) an seiner Vorderseite eine nach vorn ragende Griffschlaufe (16) hat.

7. Befestigungsvorrichtung nach zumindest einem der vorangehenden Ansprüche, **dadurch gekennzeichnet, daß** zur Verankerung der beiden Gurte (23, 24) ein an der Rückseite des Fahrzeugsitzes (2) befestigbarer Träger (25) mit zwei Schlitzen (26, 27) zum Durchführen jeweils eines Endes eines Gurtes (23, 24) vorgesehen ist.

8. Befestigungsvorrichtung nach zumindest einem der vorangehenden Ansprüche, **dadurch gekennzeichnet, daß** sie zur Verankerung der beiden Gurte (23, 24) zwei Konsolen (29) aufweist, welche jeweils zur Befestigung an jeder Seite des Fahrzeugsitzes (2, 4) auf seiner Schwenkachse für die Rückenlehne (7) ausgebildet sind.

## Claims

1. Fastening device for a child seat comprising two lock tongues, a baby seat or the like on a vehicle seat, in which for releasably receiving the lock tongues there are provided two belt locks which are in each case arranged on a belt which is to be anchored to the vehicle or vehicle seat and which passes through between a seat surface and a backrest, **characterised in that** the two belt locks (10, 11) are held in a common adapter (6) which on its rear side has a supporting surface (19, 20) designed for abutment against the backrest (7).

2. Fastening device according to claim 1, **characterised in that** the adapter (6) for support of the belt locks (10, 11) has on each side an open-topped receptacle (8, 9) for placement of a belt lock (10, 11).

3. Fastening device according to claim 2, **characterised in that** each receptacle (8, 9) has a front boundary wall (12) with a slot (13) for passage of a lock tongue (21, 22) and a rear latch tongue (14) for latching to the belt lock (10, 11).

4. Fastening device according to claim 3, **characterised in that** the latch tongue (14) is designed for engagement between the housing of the belt lock (10, 11) and its belt holding portion (15).

5. Fastening device according to one or more of the preceding claims, **characterised in that** the adapter (6) has, adjoining each receptacle (8, 9), an upwardly directed web (17, 18) each with a supporting surface (19, 20).

6. Fastening device according to one or more of the preceding claims, **characterised in that** the adapter (6) has on its front side a forwardly extending grip loop (16).

7. Fastening device according to one or more of the preceding claims, **characterised in that** for anchoring of the two belts (23, 24) there is provided a carrier (25) which can be fastened to the rear side of the vehicle seat (2), with two slots (26, 27) for passage of in each case one end of a belt (23, 24).

8. Fastening device according to one or more of the preceding claims, **characterised in that** for anchoring of the two belts (23, 24) it comprises two brackets (29) which are designed for fastening on each side of the vehicle seat (2, 4) on its pivot axis for the backrest (7).

## Revendications

1. Dispositif de fixation pour un siège d'enfant pourvu de deux languettes de verrouillage, un berceau ou similaire, dans lequel il est prévu pour recevoir de manière démontable les languettes de verrouillage, deux attaches de ceinture qui sont disposées chacune sur une sangle à fixer au véhicule ou au siège de véhicule, entre un siège et un dossier, **caractérisé en ce que** les deux attaches de ceinture (10, 11) sont tenues dans un adaptateur (6) commun, qui présente sur sa face arrière une surface d'appui (19, 20) conformée pour venir en appui sur le dossier (7) de siège.

2. Dispositif de fixation selon la revendication 1, **caractérisé en ce que** l'adaptateur (6), pour la fixation des attaches de ceinture (10, 11), comporte de chaque côté un logement (8, 9) ouvert vers le haut prévu pour recevoir une attache de ceinture (10, 11).

3. Dispositif de fixation selon la revendication 2, **caractérisé en ce que** chaque logement (8, 9) comporte une cloison (12) avant avec une fente (13) pour l'engagement d'une languette de verrouillage (21, 22) et une languette d'encliquetage (14) postérieure pour l'encliquetage avec l'attache de ceinture (10, 11).

4. Dispositif de fixation selon la revendication 3, **caractérisé en ce que** la languette d'encliquetage (14) est conformée pour s'engager entre le boîtier de l'attache de ceinture (10, 11) et sa partie de fixation de ceinture (15).

5. Dispositif de fixation selon au moins une des revendications précédentes, **caractérisé en ce que** l'adaptateur (6), dans le voisinage de chaque logement (8, 9), comporte une barrette (17, 18) dirigée vers le haut avec chaque fois une surface d'appui (19, 20).

6. Dispositif de fixation selon au moins une des revendications précédentes, **caractérisé en ce que** l'adaptateur (6), sur sa face avant, comporte une boucle formant poignée (16) qui fait saillie vers l'avant.

7. Dispositif de fixation selon au moins une des revendications précédentes, **caractérisé en ce que** pour l'ancrage des deux sangles (23, 24), il est prévu un support (25) avec deux fentes (26, 27) pour le passage d'une extrémité d'une sangle (23, 24), qui peut être fixé à la face arrière du siège de véhicule (2).

8. Dispositif de fixation selon au moins une des revendications précédentes, **caractérisé en ce qu'**il présente pour l'ancrage des deux sangles (23, 24) deux consoles (29), qui sont agencées chacune en vue de leur fixation d'un côté du siège de véhicule (2, 4), sur 1' axe d'articulation de celui-ci pour le dossier (7).
